# EUROPÄISCHE PATENTSCHRIFT

(11) **EP 0 457 089 B1**
(45) Veröffentlichungstag und Bekanntmachung des Hinweises auf die Patenterteilung: **09.03.1994**
(21) Anmeldenummer: 91106961.5
(22) Anmeldetag: 30.04.1991
(51) Int. Cl.: C08G 18/10, C08G 18/32, C08L 63/00

(54) **Verfahren zur Herstellung von Aminen und ihre Verwendung als Härter für Epoxidharze**
Process for the preparation of amines and their use as curing agent for epoxy resins
Procédé de préparation d'amines et leur utilisation comme durcisseur pour des résines époxydes

(30) Priorität: 12.05.1990 DE 4015302
(43) Veröffentlichungstag der Anmeldung: 21.11.1991
(73) Patentinhaber: BAYER AG, 51368 Leverkusen (DE)
(72) Erfinder: Schmalstieg, Lutz, Dr., W-5000 Köln 1 (DE); Hentschel, Karl-Heinz, Dr., W-5060 Bergisch Gladbach 1 (DE); Pedain, Josef, Dr., W-5000 Köln 80 (DE); Nachtkamp, Klaus, Dr., W-4000 Düsseldorf 13 (DE)

(56) Entgegenhaltungen:
- EP-A- 0 082 983
- EP-A- 0 293 110
- EP-A- 0 407 829
- DE-A- 3 311 516
- FR-A- 1 111 170
- US-A- 3 931 116
- US-A- 4 096 128

## Beschreibung

Die Erfindung betrifft ein neues Verfahren zur Herstellung von Urethan- und Harnstoffgruppen aufweisenden Aminen, vorzugsweise Polyaminen. und ihre Verwendung als elastifizierende Härter für Epoxidharze.

Kunstharze auf Basis von Epoxidharzen zeichnen sich durch eine Anzahl positiver Eigenschaften aus, wie z.B. gute Haftfestigkeit auf organischen und anorganischen Substraten, gute Lösemittelbeständigkeit oder hohe Chemikalienfestigkeit. Infolge ihrer hohen Vernetzungsdichte sind jedoch amingehärtete Epoxidharze, vor allem solche auf Basis Diphenylolpropan (Bisphenol A) und Epichlorhydrin spröde mit Glasübergangsbereichen oberhalb 20°C. Auf allen Anwendungsgebieten, für die Schlag- und Stoßfestigkeit sowie eine hohe Flexibilität erforderlich sind, entsprechen diese Kunstharze daher nicht den Anforderungen der Praxis. Das gilt insbesondere für den Bausektor, wo es gilt, Schwundrisse in z.B. Beton dauerhaft zu überbrücken.

In gewissem Umfang ist durch Verringerung der Vernetzungsdichte eine interne und durch Weichmacherzusatz eine externe Erhöhung der Elastizität erzielbar.

Externe Elastifizierungsmittel wie z.B. Teer, Phthalsäureester, hochsiedende Alkohole oder Vinylpolymere sind nicht reaktiv und werden nicht in das Duromer-Netzwerk eingebaut. Sie bewirken durch Raumausfüllung nur eine Aufweitung.

Eine interne Elastifizierung durch Verringerung der Vernetzungsdichte läßt sich durch Reduzierung der Funktionalität des Härters erreichen. Die diesbezüglich mit Erfolg seit langem und in erheblichem Umfang gebräuchlichen langkettigen, niederfunktionellen Aminoamide auf Basis dimerisierter Fettsäuren sind aber nicht auf allen Gebieten einsetzbar.

Eine gute und dauerhafte Elastifizierung der Epoxidharze läßt sich durch Kombination mit Polyurethanen erreichen. So wurden z.B. in der DE-OS 12 52 606 elastifizierte Kunststoffe beschrieben aus Epoxidharzen, polyfunktionellen Carbamidsäurearylestern und Polyarninen. Auf diese Weise hergestellte Kunststoffe sind jedoch mit zweierlei Nachteilen behaftet: Zum einen ist die Anwendung eines 3-Komponenten-Systems nicht immer unproblematisch, zum anderen werden im Verlauf der Härtung solcher Kunststoffe Phenole oder substituierte Phenole freigesetzt, die - da sie nicht chemisch gebunden werden - auf lange Sicht aus den Kunststoffen auswandern, was letztendlich zu einer Verschlechterung der Produkteigenschaften führt.

In der DE-AS 24 18 041 wird ein Verfahren zur Herstellung von elastifizierten Formteilen und Flächengebilden beschrieben, gemäß welchem bestimmte Epoxidverbindungen mit Aminverbindungen umgesetzt werden, die durch Hydrolyse bestimmter prepolymerer Ketimine bzw. Enamine erhalten werden. Mit diesem Verfahren sind chemikalienfeste, gut haftende Duromere mit verbesserten Eigenschaften herstellbar. Das in dieser Veröffentlichung beschriebene Verfahren ist jedoch verfahrenstechnisch relativ aufwendig und somit teuer. Außerdem ist das Verfahren nicht universell anwendbar, da nach eigenen Versuchen nur Isocyanat-Prepolymere auf Basis aliphatischer Polyisocyanate mit Hydroxyketiminen unter vollständigem Erhalt der Ketiminstruktur umgesetzt werden können.

Gemäß US-A-3 931 116 werden hochmolekulare aminterminierte Polyetherurethanharnstoffe durch Reaktion von freie Isocyanatgruppen enthaltenden Prepolymeren mit Aminen in stark verdünnten Lösungen hergestellt und anschließend mit Epoxidharzen ausgehärtet. Der Einsatz der hierzu erforderlichen, insbesondere aromatischen Lösungsmitteln ist in der Praxis sowohl vom technischen als auch physiologischen Standpunkt aus nachteilig. Andererseits ist die Viskosität der lösungsmittelfreien Reaktionsprodukte, wie sie gemäß der DE-OS 23 38 256 gezielt hergestellt werden, für die Anwendung in der Praxis zu hoch.

Um eine gezielte Reaktion von Polyisocyanatprepolymeren mit überschüssigen Mengen Diamin zu ermöglichen, wurde daher vielfach vorgeschlagen, die Polyisocyanate in blockierter Form einzusetzen, so z.B. beschrieben in CA-PS 12 19 986, EP-A-0 293 110 oder EP-A-0 082 983. All diesen Veröffentlichungen ist gemeinsam, daß als bevorzugte Blockierungsmittel Phenole oder substituierte Phenole eingesetzt werden. Nach erfolgter Reaktion mit den Polyaminen können diese Substanzen aufgrund ihres hohen Siedepunkts nicht oder nur unvollständig destillativ aus dem Reaktionsgemisch entfernt werden. Das Verbleiben der gegebenenfalls substituierten Phenole in der Aminmischung bzw. in der Kunststoffmasse führt aber zu den bereits erwähnten Nachteilen.

In den letztgenannten Veröffentlichungen wird zwar darauf hingewiesen, daß prinzipiell auch die anderen in der Polyurethanchemie üblichen Blockierungsmittel verwendet werden können. Solche in der Polyurethanchemie gebräuchlichen Blockierungsmittel sind Oxime, Caprolactam, Malonsäureester und Acetessigester. Diesen Blockierungsmitteln ist ein relativ hoher Siedepunkt gemeinsam, so daß auch diese Substanzen nicht oder nur zum Teil destillativ aus dem Reaktionsgemisch entfernt werden können. Da keines dieser Blockierungsmittel im Verlauf der Epoxidhärtung in das Polymergerüst eingebaut werden kann, bietet die Verwendung solcher Blockierungsmittel anstelle der bevorzugt eingesetzten, gegebenenfalls substituierten Phenole, keinerlei Vorteile.

Es war daher die der Erfindung zugrundeliegende Aufgabe, ein lösungsmittelfrei bei relativ niedrigen Temperaturen durchführbares Verfahren zur Herstellung von Urethan- und Harnstoffgruppen aufweisenden Aminen, insbesondere Polyaminen zur Verfügung zu stellen, die ausschließlich Epoxid-reaktive Bestandteile enthalten und sich als elastifizierende Härter für Epoxidharze eignen.

Diese Aufgabe konnte mit der Bereitstellung des nachstehend näher beschriebenen Verfahrens gelöst werden.

Gegenstand der Erfindung ist ein Verfahren zur Herstellung von Urethan- und Harnstoffgruppen aufweisenden Aminen, dadurch gekennzeichnet, daß man
A) Urethangruppen aufweisende Isocyanat-Prepolymere, deren Isocvanatgruppen mit sekundären Monoaminen, welche nach des Umsetzung der Komponente A) mit des Komponente B) destillativ aus dem Reaktions gemisch entfernt werden können, reversibel blockiert sind, mit
B) mindestens difunktionellen Aminen des Molekulargewichtsbereichs 60 bis 500, welche insgesamt mindestens zwei primäre oder sekundäre Aminogruppen aufweisen,

unter Abspaltung des sekundären Monoamins und dessen destillativer Entfernung aus dem Reaktionsgemisch bei 60 bis 140°C zur Reaktion bringt, wobei die Reaktionspartner in solchen Mengenverhältnissen zum Einsatz gelangen, daß auf jede blockierte Isocyanatgruppe der Komponente A) mehr als 1,25 primäre und/oder sekundäre Aminogruppen der Komponente B) entfallen.

Die blockierten Isocyanat-Prepolymeren A) werden vorzugsweise durch Umsetzung von Polyetherpolyolen des Molekulargewichtsbereichs 500 bis 10.000 mit einem Überschuß eines organischen Polyisocyanats und anschließende Umsetzung der verbleibenden, freien Isocyanatgruppen mit einem sekundären Monoamin hergestellt, wobei als sekundäre Monoamine solche verwendet werden, die nach der Umsetzung destillativ aus dem Reaktionsgemisch entfernt werden können.

Bei der Umsetzung der Komponenten A) und B) werden diese vorzugsweise in solchen Mengen eingesetzt, die einem Molverhältnis von primären und/oder sekundären Aminogruppen der Komponente B) zu blockierten Isocyanatgruppen der Komponente A) von 2 : 1 bis 10 : 1 entsprechen.

Gegenstand der Erfindung ist auch die Verwendung die nach diesem Verfahren erhaltenen Urethan- und Harnstoffgruppen aufweisenden Amine als elastifizierende Härter für Epoxidharze.

Die Verwendung von organischen Polyisocyanaten in mit sekundären Monoaminen blockierter Form in Kombination mit gegenüber Isocyanatgruppen reaktionsfahigen Verbindungen ist aus der DE-OS 32 21 558 zwar bereits bekannt, jedoch werden gemäß dieser Veröffentlichung insbesondere niedermolekulare Polyisocyanate in mit Monoamin blockierter Form mit höhermolekularen organischen Polyhydroxylverbindungen kombiniert. Dieser Veröffentlichung können jedoch keinerlei Informationen entnommen werden in Bezug auf die Reaktion aminblockierter NCO-Prepolymere mit niedermolekularen Polyaminen.

Die gleiche Feststellung rechtfertigt sich im Hinblick auf die Offenbarung der DE-OS 33 11 516, die Kombinationen von mit sekundären Monoaminen blockierten Polyisocyanaten mit höhermolekularen Polyadditions-, Polykondensations- oder Polymerisationsprodukten, die mindestens zwei OH- und/oder NH-Gruppen aufweisen zum Gegenstand hat. Bei den konkret beschriebenen Reaktionspartnern für die blockierten Isocyanate handelt es sich jedoch nicht um organische Polyamine der erfindungsgemäß als Komponente B) einzusetzenden Art mit niederem Molekulargewicht sondern um die aus der Polyurethanchemie an sich bekannten höhermolekularen Polyhydroxylverbindungen oder um höhermolekulare, Hydroxylgruppen und Aminogruppen aufweisende Umsetzungsprodukte von niedermolekularen Diaminen mit Epoxidharzen.

Insbesondere konnte in Anbetracht der Tatsache, daß in den Ausführungsbeispielen Einbrenntemperaturen von 140 bis 180°C angewendet werden, nicht erwartet werden, daß die mit sekundären Monoaminen blockierten Isocyanatprepolymere bei hinreichend niedrigen Temperaturen mit niedermolekularen Polyaminen zur Reaktion gebracht werden können.

Die Herstellung der erfindungsgemäß als Komponente A) geeigneten, Urethangruppen aufweisenden Isocyanat-Prepolymeren mit mit sekundären Monoaminen blockierten Isocyanatgruppen erfolgt durch Umsetzung von bestimmten Urethangruppen aufweisenden Isocyanat-Prepolymeren der nachstehend genannten Art mit bestimmten sekundären Monoaminen der ebenfalls nachstehend genannten Art bei Temperaturen von 0 bis 100°C, vorzugsweise 20 bis 50°C. Die Menge des bei der Blockierungsreaktion eingesetzten sekundären Monoamins sollte zumindest der Menge der zu blockierenden Isocyanatgruppen äquivalent sein. Oftmals ist ein geringer Überschuß an sekundärem Monoamin zweckmäßig, um eine vollständige Umsetzung zu gewährleisten. In der Regel beträgt der Überschuß nicht mehr als 20 Mol-%, vorzugsweise nicht mehr als 10 Mol-%, bezogen auf die zu blockierenden Isocyanatgruppen. Die Blockierungsreaktion kann gegebenenfalls in Anwesenheit inerter Lösungsmittel wie beispielsweise Lacklösungsmitteln der nachstehend beispielhaft genannten Art durchgeführt werden.

Die Urethangruppen aufweisenden Isocyanat-Prepolymere werden vorzugsweise durch Umsetzung von linearen oder verzweigten Polyalkylenetherpolyolen mit Di- oder Polyisocyanaten erhalten. Die Polyalkylenetherpolyole werden nach bekannten Verfahren hergestellt, durch Alkoxylierung von geeigneten Startermolekülen und besitzen ein mittleres, aus Hydroxylfunktionalität und Hydroxylgruppengehalt berechenbares Molekulargewicht von 500 bis 10.000, vorzugsweise 1.000 bis 6.000. Geeignete Startermoleküle sind beispielsweise einfache Polyole, Wasser, organische Polyamine mit mindestens zwei NH-Bindungen oder beliebige Gemische derartiger Startermoleküle. Für die Alkoxylierung geeignete Alkylenoxide sind insbesondere Ethylenoxid und/oder Propylenoxid, die in beliebiger Reihenfolge oder auch im Gemisch bei der Alkoxylierungsreaktion eingesetzt werden können. Grundsätzlich möglich ist ebenfalls die Mitverwendung von einwertigen Polyetheralkoholen, so daß bei der Herstellung der Isocyanat-Prepolymere Etheralkohole einer (mittleren) Hydroxylfunktionalität von 1,5 bis 4 zum Einsatz gelangen. Vorzugsweise liegt die (mittlere) Hydroxylfunktionalität der zur Herstellung der Isocyanat-Prepolymeren verwendeten Polyetheralkohole bei 2 bis 4.

Zur Herstellung der Isocyanat-Prepolymeren geeignete Polyisocyanate sind beliebige organische Polyisocyanate, vorzugsweise Diisocyanate des Molekulargewichtsbereichs 166 bis 500, vorzugsweise 166 bis 300. In Betracht kommen beispielsweise (cyclo)aliphatische Diisocyanate wie Hexamethylendiisocyanat, 1,3- und 1,4-Diisocyanatocyclohexan sowie beliebige Gemische dieser Isomeren, 1-Isocyanato-3,3,5-trimethyl-5-isocyanatomethyl-cyclohexan (Isophorondiisocyanat) oder 4,4'-Diisocyanato-dicyclohexylmethan.

Bevorzugt einsetzbar wegen der niedrigen Reaktionstemperaturen sind jedoch aromatische Polyisocyanate wie beispielsweise 2,4-Diisocyanatotoluol oder dessen technischen Gemische mit vorzugsweise bis zu 35 Gew.-%, bezogen auf Gemisch, an 2,6-Diisocyanatotoluol, 4,4'-Diisocyanatodiphenylmethan, dessen technischen Gemische mit 2,4'- und gegebenenfalls 2,2'-Diisocyanatodiphenylmethan und/oder mit seinen höheren Homologen.

Die beispielhaft genannten Polyetheralkohole werden in bekannter Weise mit Di- oder Polyisocyanaten in Isocyanatgruppen enthaltenden Polymere überführt. Nimmt man eine bestimmte zusätzliche Kettenverlängerung über Urethangruppen in Kauf, oder ist diese sogar erwünscht, so setzt man die Polyalkylenetherpolyole in einem NCO-/OH-Verhältnis von 1,5 bis 2,5, vorzugsweise 1,8 bis 2,2, mit den Di- oder Polyisocyanaten um. Ist eine Kettenverlängerungsreaktion nicht erwünscht, so verwendet man einen wesentlich größeren Überschuß an Di- oder Polyisocyanat, vorzugsweise einem NCO-/OH-Verhältnis von 3 bis 5 entsprechend und entfernt nach beendeter Reaktion das überschüssige Di- bzw. Polyisocyanat, z.B. im Fall destillierbarer Di- oder Polyisocyanate durch Dünnschichtdestillation oder, bei nicht destillierbaren Isocyanaten, durch Lösemittelextraktion.

Zur Herstellung der erfindungsgemäß als Komponente A) eingesetzten blockierten Isocyanat-Prepolymeren geeignete sekundäre Monoamine sind beliebige organische Verbindungen, die eine sekundäre Aminogruppe aufweisen und vorzugsweise ansonsten gegenüber Isocyanatgruppen inert sind. In Betracht kommen beispielsweise Verbindungen der Formel 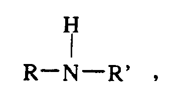
in welcher
- R und R': für gleiche oder verschiedene Reste stehen und aliphatische Kohlenwasserstoffreste mit 1 bis 18, vorzugsweise 1 bis 6 Kohlenstoffatomen oder cycloaliphatische Kohlenwasserstoffreste mit 6 bis 13, vorzugsweise 6 bis 9 Kohlenstoffatomen bedeuten oder zusammen mit dem Stickstoffatom einen, gegebenenfalls weitere Heteroatome (Stickstoff oder Sauerstoff) enthaltenden heterocyclischen Ring mit 5 oder 6 Ringgliedern bilden können.

Beispiele für geeignete bzw. bevorzugt geeignete sekundäre Monoamine sind Dimethylamin, Diethylamin, Diisopropylamin, Di-n-butylamin, Diisobutylamin, N-Methyl-n-hexylamin, N-Methyl-stearylamin, N-Ethyl-cyclohexylamin, Dicyclohexylamin, Piperidin, Hexahydroazepin, Pyrrolidin oder Morpholin. Geeignet, jedoch weniger bevorzugt, sind solche sekundären Monoamine, die neben der sekundären Aminogruppe eine weitere gegenüber Isocyanatgruppen reaktive Gruppe jedoch mit einer geringeren Reaktionsbereitschaft als sekundäre Aminogruppen aufweisen. Zu diesen Verbindungen gehören beispielsweise Aminoalkohole wie Diethanolamin oder Diisopropanolamin.

Bevorzugt geeignet sind sekundäre Monoamine, die einen niedrigen Siedepunkt aufweisen, so daß sie destillativ einfach aus dem Reaktionsgemisch entfernt werden können. Solche sekundären Monoamine sind z.B. Dimethylamin, Diethylamin, Diisopropylamin, Di-n-butylamin, Pyrrolidin, Piperidin, Morpholin oder N-Methylcyclohexylamin.

Besonders bevorzugt einsetzbar ist Diisopropylamin, da dieses Amin besonders niedrige Reaktionstemperaturen ermöglicht und aufgrund seines niedrigen Siedepunkts (84°C) bequem aus dem Reaktionsgemisch entfernt werden kann.

Bei der Herstellung der erfindungsgemäß als Komponente A) einzusetzenden, blockierten Isocyanat-Prepolymeren können gegebenenfalls die üblichen Lösungsmittel wie beispielsweise Butylacetat, Propylenglykolmonomethyletheracetat, Toluol, Xylol oder Gemische derartiger Lösungsmittel zum Einsatz gelangen.

Bei der Komponente B) handelt es sich um organische Polyamine des Molekulargewichtsbereichs 60 bis 500, vorzugsweise 60 bis 300, die insgesamt mindestens zwei primäre und/oder sekundäre Aminogruppen, vorzugsweise zwei primäre Aminogruppen pro Molekül, aufweisen. Geeignet sind beispielsweise Ethylendiamin, 1,2-Diaminopropan, 1,3-Diaminopropan, 1,4-Diaminobutan, 1,6-Diaminohexan, 2,2,4- und/oder 2,4,4-Trimethylhexamethylendiamin oder auch solche Polyamine, die neben mindestens zwei primären Aminogruppen noch sekundäre Aminogruppen aufweisen wie beispielsweise Diethylentriamin oder Triethylentetramin.

Besonders bevorzugt werden jedoch Polyamine, insbesondere Diamine, des genannten Molekulargewichtsbereichs eingesetzt, die einen oder mehrere cycloaliphatische Ringe aufweisen. Hierzu gehören beispielsweise 1,4-Diaminocyclohexan, 4,4'-Diamino-dicyclohexylmethan, 1,3-Diaminocyclopentan, 4,4'-Diamino-dicyclohexylpropan-2 ,2, 4-Isopropyl-1,2-diaminocyclohexan, 3,3,-Diamino-dicyclohexylpropan-2,2, 4-Isopropyl- 1 ,2-diaminocyclohexan, 3,3'-Dimethyl-4,4-diaminodicyclohexylmethan, 3-Aminomethyl-3,3,5-trimethylcyclohexylamin (Isophorondiamin) oder technisches Bis-aminomethyl-tricyclodecan, wie es unter der Bezeichnung "TCD-Diamin" von der Firma Hoechst AG vertrieben wird.

Bei der Durchführung des erfindungsgemaßen Verfahrens werden die Polyamine B) in solchen Mengen eingesetzt, daß auf jede blockierte Isocyanatgruppe der Komponente A) mehr als 1,25 primäre und/oder sekundäre Aminogruppen der Komponente B) entfallen. Vorzugsweise liegt das Molverhältnis von primären und/oder sekundären Aminogruppen der Komponente B) zu blockierten Isocyanatgruppen der Komponente A) bei 1,5:1 bis 20:1, insbesondere 2:1 bis 10:1.

Die erfindungsgemäße Umsetzung erfolgt innerhalb des Temperaturbereichs von 60 bis 140°C.

Prinzipiell ist es möglich, den Überschuß der Aminkomponente B) nach erfolgter Reaktion zu entfernen, z.B. durch Dünnschichtdestillation. Eine bevorzugte Ausführungsform der vorliegenden Erfindung besteht jedoch darin, daß die Amine im Reaktionsgemisch verbleiben und so als Viskositäts- und Reaktionsregulatoren wirken. Das Verhältnis zwischen Reaktionsprodukt und freiem Amin kann innerhalb relativ weiter Grenzen variiert und somit das Härtungsmittel den jeweiligen Erfordernissen der Praxis hinsichtlich Viskosität und Reaktivität angepaßt werden.

Eine Besonderheit des Verfahrens nach der vorliegenden Erfindung besteht darin, während der und/oder im Anschluß an die Reaktion von A) mit B) das Blockierungsrnittel destillativ aus dem Reaktionsgemisch zu entfernen. Diese Verfahrensweise ist problemlos durchzuführen, wenn der Siedepunkt des zur Blockierung eingesetzten Monoamins wesentlich niedriger ist als der der Aminkomponente B).

Bei den erfindungsgemäßen Verfahrensprodukten handelt es sich somit um Urethan- und Harnstoffgruppen aufweisende Amine, vorzugsweise Polyamine, wie sie bei der Umsetzung von A) mit B) unter destillativer Entfernung des Blockierungsmittels und eines etwaigen Überschusses der Komponente B) entstehen, oder um Gemische aus i) derartigen Aminen, vorzugsweise Polyaminen, mit iii) überschüssigem Polyamin B), wobei diese Gemische im allgemeinen, bezogen auf das Gesamtgewicht der Komponenten (i), und (iii), mindestens 2,5 Gew.-%, vorzugsweise mindest 10 Gew.-%, der Komponente (i), und/oder bis zu 75 Gew.-% der Komponente (iii) enthalten, mit der Maßgabe, daß sich die genannten Prozentsätze zu 100 ergänzen. Die erfindungsgemäß besonders bevorzugten Urethan- und Harnstoffgruppen aufweisenden Polyamine (Komponente i)) enthalten im Mittel 1,5 bis 4 primäre und/oder sekundäre Aminogruppen pro Molekül und weisen ein mittleres, aus der Stöchiometrie der Ausgangsmaterialien berechenbares Molekulargewicht von 1.000 bis 7.500 auf. Der Gehalt der erfindungsgemäßen Verfahrensprodukte an primären Aminogruppen liegt vorzugsweise bei 0,5 bis 20 Gew.-%. Ihre Viskosität bei 22°C liegt vorzugsweise bei 5.000 bis 300.000 mPa.s. Bei Viskositäten von oberhalb 200.000 mPa.s/22°C erfolgt ihre weitere Verwendung vorzugsweise in Kombination mit Viskositätsregulatoren der nachstehend genannten Art.

Mischungen aus den erfindungsgemäßen Verfahrensprodukten und Epoxidharzen sind heiß und kalt härtbar. Geeignete Epoxidharze enthalten im Durchschnitt mehr als eine Epoxidgruppe pro Molekül und können Glycidylether von mehrwertigen Alkoholen wie z.B. Butandiol, Hexandiol, Glycerin, hydriertes Diphenylpropan oder von mehrwertigen Phenolen wie z.B. Resorcin, Diphenylolpropan oder Phenol-Aldehyd-Kondensaten sein. Es können auch die Glycidylether mehrwertiger Carbonsäuren, wie Hexahydrophthalsäure oder dimerisierte Fettsäure verwendet werden.

Besonders bevorzugt ist der Einsatz von flüssigen Epoxidharzen auf Basis von Epichlorhydrin und Diphenylolpropan mit einem Molekulargewicht von 340 bis 450. Gewünschtenfalls kann mit monofunktionellen Epoxidverbindungen die Viskosität der Mischungen gesenkt und dadurch die Verarbeitbarkeit verbessert werden. Beispiele hierfür sind aliphatische und aromatische Glycidylether, wie Butylglycidylether, Phenylglycidylether oder Glycidylester wie Glycidylacrylat oder Epoxide wie Styroloxid oder 1,2-Epoxydodecan.

Die erfindungsgemäßen Verfahrensprodukte können gegebenenfalls vor ihrer erfindungsgemäßen Verwendung noch mit weiteren aminischen Härtungsmitteln der aus der Epoxidharzchemie an sich bekannten Art abgemischt werden. Beispielhaft genannt seien in diesem Zusammenhang die auf diesem Gebiet üblichen aminischen Härtungsmittel wie z.B. gegebenenfalls Imidazolingruppen enthaltende Polyaminoamide.

Zur Herstellung von gebrauchsfertigen Mischungen können den Kombinationen aus Epoxidharzen und erfindungsgemäßen Härtern die üblichen Hilfs- und Zusatzmittel wie beispielsweise Füllstoffe, Pigmente, Reaktionsbeschleuniger oder Viskositätsregulatoren einverleibt werden. Beispielhaft genannt seien Reaktionsbeschleuniger wie Salicylsäure, Bis-(dimethylaminomethyl)-phenol oder Tris(dimethylaminomethyl)-phenol, Füllstoffe wie Sande, Gesteinsmehl, Kieselsäure, Asbestmehl, Kaolin, Talkum, Metallpulver, Teer, Teerpech, Asphalte, Korkschrote, Polyamide, Weichmacher wie beispielsweise Phthalsäureester oder andere Viskositätsregulatoren wie beispielsweise Benzylalkohol. Epoxidharz-Härter-Kombinationen, in denen als Härter die erfindungsgemäßen Verfahrensprodukte eingesetzt bzw. mitverwendet werden, eignen sich zur Herstellung von Überzügen, Klebstoffen, Dichtungsmassen oder Formteilen auf allen Anwendungsgebieten, wo gute Haftung, Chemikalienbeständigkeit, sowie hohe Schlag- und Stoßfestigkeit, verbunden mit verbesserter Flexibilität und Elastizität, gefordert werden.

In den nachfolgenden Beispielen beziehen sich alle Prozentangaben auf Gewichtsprozente. Der Gehalt der Verfahrensprodukte an primären bzw. sekundären Aminogruppen wurde titrimetrisch bestimmt.

### Beispiele

### A) Herstellung eines mit sekundärem Monoamin blockierten Isocyanatprepolymeren (Prepolymer A))

2.000 g eines Polyetherdiols der OH-Zahl 28, hergestellt durch Propoxylierung von Propylenglykol und anschließende Ethoxylierung des Propoxylierungsproduktes (PO:EO-Gewichtsverhältnis = 86:14) werden mit 174 g 2,4-Diisocyanatotoluol bei 70°C prepolymerisiert bis ein konstanter NCO-Gehalt von 1,9 % erreicht ist. Nach Abkühlen auf Raumtemperatur tropft man 106 g Diisopropylamin zügig zu und rührt so lange, bis die Mischung kein freies Isocyanat mehr enthält. Der Gehalt an blockierten NCO-Gruppen (berechnet als NCO) liegt bei 1,84%.

### Beispiel 1

Zu 2.280 g des blockierten Prepolymers A) gibt man 444 g Isophorondiamin und erwärmt unter Rühren auf 70°C. Danach destilliert man freiwerdendes Diisoproylamin unter Verminderung des Druckes auf 20 mbar ab. Nach ca. 5 h Rühren im Vakuum ist die Umsetzung beendet, daran erkenntlich, daß kein weiteres Destillat erhalten werden kann. Der Gehalt an primären Aminogruppen liegt bei 1,56 %. Die Viskosität des Polyamins beträgt 150.000 mPas/22°C.

Härtung eines Epoxidharzes:

19 g eines handelsüblichen Epoxidharzes aus Diphenylolpropan und Epichlorhydrin vom mittleren Molekulargewicht 380 werden mit 44 g des vorstehend beschriebenen Polyamins vermischt. Zur Härtung wird 1 h auf 100°C erwärmt Dabei erhält man einen zähelastischen Kunststoff der Härte Shore D 40.

### Beispiel 2

Zu 2.280 g des blockierten Prepolymers A) gibt man 388 g technisches Bis-aminomethyltricyclodecan ("TCD-Diamin" der Fa. Hoechst AG). Nach Erwärmung auf 70°C destilliert man freiwerdendes Diisopropylamin unter Verminderung des Druckes ab. Das resultierende Polyamin hat einen Gehalt an primären Aminogruppen von 1,52 %. Die Viskosität der Mischung beträgt 200.000 mPas/22°C.

Härtung eines Epoxidharzes:

19 g eines handelsüblichen Epoxidharzes aus Diphenylolpropan und Epichlorhydrin vom mittleren Molekulargewicht 380 werden mit 42 g des vorstehend beschriebenen Polyamins vermischt. Die Mischung härtet bei Raumtemperatur und besitzt eine Topfzeit von ca. 2 h. Der ausgehärtete Kunststoff besitzt eine Härte von Shore D 38.

### Beispiel 3

Zu 2.280 g des blockierten Prepolymers A) gibt man 129 g N-(2-Aminoethyl)piperazin. Nach Erwärmen auf 70°C destilliert man freiwerdendes Diisopropylamin unter Verminderung des Druckes ab. Nach beendeter Umsetzung verdünnt man mit Benzylalkohol auf einen Festkörpergehalt von 70 %. Die Mischung hat eine Viskosität von 60.000 mPas/22°C, der Gehalt an primären Aminogruppen liegt bei 0,22 %, an sekundären Aminogruppen bei 0,19 %.

### Beispiel 4

Zu 2.280 g des blockierten Prepolymers A) gibt man 257,5 g Diethylentriamin. Nach Erwärmen auf 70°C destilliert man freiwerdendes Diisopropylamin unter Verminderung des Druckes ab. Das resultierende Polyamin hat eine Viskosität von 82.000 mPas/23°C. Der Gehalt an primären Aminogruppen liegt bei 2,49 %, an sekundären Aminogruppen bei 1,04%.

### Beispiel 5

Zu 2.280 g des blockierten Prepolymers A) gibt man 158 g eines Isomerengemisches aus 2,2,4- und 2,4,4-Trimethylhexamethylendiamin. Nach Erwärmen auf 70°C destilliert man freiwerdendes Diisopropylamin unter Verminderung des Druckes ab. Das resultierende Polyamin hat eine Viskosität von 150.000 mPas/22°C. Der Gehalt an primären Aminogruppen beträgt 0,6 %.

Härtung eines Epoxidharzes:

19 g eines handelsüblichen Epoxidharzes aus Diphenylolpropan und Epichlorhydrin vom mittleren Molekulargewicht 380 werden mit 115 g des vorstehend beschriebenen Polyamins vermischt. Zur Härtung wird 1 h auf 100°C erwärmt Dabei erhält man einen elastischen Kunststoff der Härte Shore A 42.

### B) Herstellung eines mit sekundärem Monoamin blockierten Isocyanatprepolymeren (Prepolymer B))

3.000 g eines Polyetherpolyols der OH-Zahl 48, hergestellt durch Propoxylierung von Trimethylolpropan werden mit 1.400 g 2,4-Diisocyanatotoluol 5 Stunden unter Rühren auf 70°C erhitzt. Anschließend wird der Überschuß an Diisocyanat durch Vakuum-Dünnschichtdestillation entfernt. Es entsteht ein Isocyanatendgruppen enthaltendes Prepolymer mit einem NCO-Gehalt von 3,2 %. Zu 1.000 g dieses Prepolymers werden bei Raumtemperatur 103 g Di-n-butylamin zügig zugetropft. Dabei erwärmt sich die Mischung auf ca. 40°C. Die Mischung wird ohne zu erwärmen so lange gerührt, bis das Produkt keine nachweisbaren Mengen an Isocyanat enthält. Das Produkt hat einen Gehalt an blockierten NCO-Gruppen von 2,9 %.

### Beispiel 6

1.448 g des blockierten Prepolymers B) werden mit 510 g Isophorondiamin vermischt. Man erwärmt auf 100°C und destilliert freiwerdendes Dibutylamin unter Verminderung des Druckes ab.

Das resultierende Polyamin hat einen Gehalt an primären Aminogruppen von 4,0 %. Die Viskosität beträgt 60.000 mPas/22°C.

### C) Herstellung eines mit sekundärem Monoamin blockierten Isocyanatprepolymeren (Prepolymer C))

Zu 1.000 g des dünnschichtdestillierten NCO-Prepolymers gemäß B) werden bei Raumtemperatur 68 g Piperidin zügig zugetropft. Dabei erwärmt sich die Mischung auf ca. 40°C. Die Mischung wird ohne zu erwärmen so lange gerührt, bis das Produkt keine nachweisbaren Mengen an Isocyanat enthält. Das Produkt hat einen Gehalt an blockierten NCO-Gruppen von 3,0%.

### Beispiel 7

1.400 g des blockierten Prepolymers C) werden mit 510 g Isophorondiamin vermischt. Man erwärmt auf 100°C und destilliert freiwerdendes Piperidin unter Verminderung des Druckes ab. Das resultierende Polyamin hat einen Gehalt an primären Aminogruppen von 4,0%. Die Viskosität beträgt 60.000 mPas/22°C.

### D) Herstellung eines mit sekundärem Monoamin blockierten NCO-Prepolymeren (Prepolymer D))

1.000 g eines Polyetherpolyols des Molekulargewichts 2.000, hergestellt durch Propoxylierung von Propylenglykol, und 211 g Isophorondiisocyanat werden bei 100°C zu einem NCO-Prepolymeren mit einem NCO-Gehalt von 3,1 % umgesetzt. Nach Abkühlen auf Raumtemperatur tropft man 91 g Diisopropylamin zügig zu und rührt so lange, bis die Mischung kein freies Isocyanat mehr enthält. Das Produkt hat einen Gehalt an blockierten NCO-Gruppen von 2,9 %.

### Beispiel 8

1.450 g des blockierten Prepolymers D) werden mit 436 g technischem Bis-aminomethyltricyclodecan ("TCD-Diamin" der Fa. Hoechst AG) vermischt. Man erwärmt auf 70°C und destilliert freiwerdendes Diisopropylamin unter Verminderung des Druckes ab. Nach beendeter Reaktion verdünnt man mit Benzylalkohol auf einen Festkörpergehalt von 90 %. Die Viskosität der Mischung beträgt 50.000 mPas/22°C. Der Gehalt an primären Aminogruppen beträgt 2,65%.

### E) Herstellung eines mit sekundärem Monoamin blockierten NCO-Prepolymeren (Prepolymer E))

2.000 g eines Polyetherdiols der OH-Zahl 28, hergestellt durch Propoxylierung von Propylenglykol und anschließende Ethoxylierung des Propoxylierungsprodukts (PO:EO-Gewichtsverhältnis = 86:14) werden mit 225 g 4,4'-Diisocyanatodiphenylmethan bei 70°C prepolymerisiert, bis ein konstanter NCO-Gehalt von 1,5 % erreicht ist. Nach Abkühlen auf Raumtemperatur tropft man 81 g Diisopropylamin bei Raumtemperatur zügig zu und rührt so lange bis die Mischung kein freies Isocyanat mehr enthält. Das Produkt hat einen Gehalt an blockierten NCO-Gruppen von 1,45 %.

### Beispiel 9

2.895 g des blockierten Prepolymers E) werden mit 436 g technischem Bis-aminomethyl-tricyclodecan ("TCD-Diamin" der Fa Hoechst AG) vermischt. Man erwärmt auf 70°C und destilliert freiwerdendes Diisopropylamin unter Verminderung des Druckes ab. Nach beendeter Reaktion verdünnt man mit Benzylalkohol auf einen Festkörpergehalt von 90 %. Die Viskosität der Mischung beträgt 60.000 mPas/22°C. Der Gehalt an primären Aminogruppen beträgt 1,51 %.

## Patentansprüche

1. Verfahren zur Herstellung von Urethan- und Harnstoffgruppen aufweisenden Aminen, dadurch gekennzeichnet, daß man
A) Urethangruppen aufweisende Isocyanat-Prepolymere, deren Isocyanatgruppen mit sekundären Monoaminen, welche die nach der Umsetzung der Komponente A) mit der Komponente B) destillativ aus dem Reaktionsgemisch entfernt werden können, reversibel blockiert sind, mit
B) mindestens difunktionellen Aminen des Molekulargewichtsbereichs 60 bis 500, welche insgesamt mindestens zwei primäre oder sekundäre Aminogruppen aufweisen,
unter Abspaltung des sekundären Monoamins und dessen destillativer Entfernung aus dem Reaktionsgemisch bei 60 bis 140° C zur Reaktion bringt, wobei die Reaktionspartner in solchen Mengenverhältnissen zum Einsatz gelangen, daß auf jede blockierte Isocyanatgruppe der Komponente A) mehr als 1,25 primäre und/oder sekundäre Aminogruppen der Komponente B) entfallen.

2. Verfahren gemäß Anspruch 1, dadurch gekennzeichnet, daß die blockierten Isocyanat-Prepolymeren A) hergestellt werden durch Umsetzung von Polyetherpolyolen des Molekulargewichtsbereichs 500 bis 10.000 mit einem Überschuß eines organischen Polyisocyanats und anschließende Umsetzung der verbleibenden, freien Isocyanatgruppen mit einem sekundären Monoamin.

3. Verfahren gemäß Anspruch 1 bis 2 dadurch gekennzeichnet, daß man als sekundares Monoamin Diisopropylamin verwendet.

4. Verfahren gemäß Anspruch 1 bis 3, dadurch gekennzeichnet, daß man die Komponenten A) und B) in solchen Mengen einsetzt, die einem Molverhältnis von primären und/oder sekundären Aminogruppen der Komponente B) zu blockierten Isocyanatgruppen der Komponente A) von 2:1 bis 10:1 entsprechen.

5. Verfahren gemäß Anspruch 1 bis 4, dadurch gekennzeichnet, daß man als Komponente B) ein, mindestens einen cycloaliphatischen Ring aufweisendes diprimäres Diamin verwendet.

6. Verwendung der gemäß Anspruch 1 bis 5 erhaltenen, Urethan- und Harnstoffgruppen aufweisenden Amine als elastifizierende Härter für Epoxidharze.

## Claims

1. A process for the production of amines containing urethane and urea groups, characterised in that
A) isocyanate prepolymers containing urethane groups in which the isocyanate groups are reversibly blocked with secondary monoamines which can be removed from the reaction mixture by distillation after the reaction of component A) with component B) are reacted with
B) amines in the molecular weight range of from 60 to 500 which are at least difunctional and which have a total of at least two primary or secondary amino groups
with splitting off of the secondary monoamine and its removal by distillation from the reaction mixture at 60 to 140°C, the reactants being put into the process in such quantitative ratios that more than 1.25 primary and/or secondary amino groups of component B) are provided for each blocked isocyanate group of component A).

2. A process according to Claim 1, characterised in that the blocked isocyanate prepolymers A) are produced by the reaction of polyether polyols in the molecular weight range of from 500 to 10,000 with an excess of an organic polyisocyanate followed by reaction of the remaining free isocyanate groups with a secondary monoamine.

3. A process according to Claims 1 to 2, characterised in that the secondary monoamine used is diisopropylamine.

4. A process according to Claims 1 to 3, characterised in that components A) and B) are put into the process in quantities corresponding to a molar ratio of primary and/or secondary amino groups of component B) to blocked isocyanate groups of components A) of from 2:1 to 10:1.

5. A process according to Claims 1 to 4, characterised in that a diprimary diamine containing at least one cycloaliphatic ring is used as component B).

6. Use of the amines containing urethane and urea groups obtained according to Claims 1 to 5 as elasticizing hardeners for epoxide resins.

## Revendications

1. Procédé de production d'amines portant des groupes uréthanne et urée, caractérisé en ce qu'on fait réagir à une température de 60 à 140°C
A) des prépolymères de type isocyanate portant des groupes uréthanne, dont les groupes isocyanato sont protégés de façon réversible avec des mono-amines secondaires qui peuvent être éliminées du mélange réactionnel par distillation après réaction du composant A) avec le composant B), avec
B) des amines au moins difonctionnelles de poids moléculaire compris dans la plage de 60 à 500, qui présentent au total au moins deux groupes amino primaires ou secondaires,
avec départ de la mono-amine secondaire et son élimination par distillation du mélange réactionnel, les partenaires réactionnels étant utilisés en proportions quantitatives telles qu'il y ait plus de 1,25 groupe amino primaire et/ou secondaire du composant B) pour chaque groupe isocyanato protégé du composant A).

2. Procédé suivant la revendication 1, caractérisé en ce que les prépolymères de type isocyanate A) protégés sont préparés par réaction de polyétherpolyols de poids moléculaire compris dans la plage de 500 à 10 000 avec un excès d'un polyisocyanate organique puis réaction des groupes isocyanato libres restants avec une mono-amine secondaire.

3. Procédé suivant la revendication 1 ou 2, caractérisé en ce qu'on utilise comme mono-amine secondaire la diisopropylamine.

4. Procédé suivant les revendications 1 à 3, caractérisé en ce qu'on utilise les composants A) et B) en des quantités qui correspondent à un rapport molaire des groupes amino primaires et/ou secondaires du composant B) aux groupes isocyanato protégés du composant A) de 2:1 à 10:1.

5. Procédé suivant les revendications 1 à 4, caractérisé en ce qu'on utilise comme composant B) une diamine diprimaire présentant au moins un noyau cycloaliphatique.

6. Utilisation des amines portant des groupes uréthanne et urée, obtenues suivant les revendications 1 à 5, comme durcisseurs élastifiants pour résines époxyde.
